Europäisches Patentamt

European Patent Office

Office européen des brevets

(11) Publication number: **0 192 344**
**A1**

(12) # EUROPEAN PATENT APPLICATION

(21) Application number: **86300470.1**

(22) Date of filing: **23.01.86**

(51) Int. Cl.⁴: **B 62 D 25/18**

(30) Priority: **23.01.85 GB 8501711**

(43) Date of publication of application:
**27.08.86 Bulletin 86/35**

(84) Designated Contracting States:
**AT BE CH DE FR GB IT LI LU NL SE**

(71) Applicant: **Millwood Rubber Company Limited
Portland Mills Portland Place Mottram Road
Stalybridge Cheshire SK15 3AB(GB)**

(72) Inventor: **Kenyon, Edric
5 High Bank Avenue
Stalybridge Cheshire(GB)**

(74) Representative: **Orr, William McLean et al,
Haseltine Lake & Co Hazlitt House 28 Southampton
Buildings Chancery Lane
London WC2A 1AT(GB)**

(54) **Anti-spray flap for a vehicle wheel.**

(57) There is disclosed an anti-spray flap (10) for a vehicle wheel which is intended to be mounted on a vehicle body in such a position as to be in the path of water picked-up from a road surface by the vehicle wheel and directed rearwardly thereby, the flap being made of rubber, synthetic rubber or other elastomeric material and having a drainage surface (14) and a plurality of projections (13) on at least part of the drainage surface. The projections comprise elongage rod-like projections (18) which are arranged in a first set of parallel rows (19), and a second set of parallel rows (20) extending perpendicular to the first set of rows, and the centre-to-centre spacing-apart $(1_1)$ of the projections along each row is equal to approximately three times the transverse dimension (d) of each projection. The slenderness ratio of each projection (18) is such that it extends from the drainage surface (14) through a length (h) which is equal to between eight and a half and ten times the transverse dimension (d) of the projection, and each projection is made of a material which imparts a Shore hardness in the range 55 to 63. The design parameters of the projections (18) are such as to absorb the energy of water sprayed onto the flap by a vehicle wheel, yet permit vertical downward drainage of the spray along the drainage surface with reduction of lateral spray generation.

EP 0 192 344 A1

**0192344**

ANTI-SPRAY FLAP FOR A   VEHICLE WHEEL

This invention relates to an anti-spray flap for a vehicle wheel.

It is well known to provide an anti-spray flap on a mudguard or wheel arch of a vehicle, and particularly on lorries, in order to minimise the spray thrown-up by the vehicle wheel and into the path of following traffic.

In its simplest form, an anti-spray flap comprises a plate or sheet of rubber which is mounted on the body of a vehicle in a suitable position with respect to the vehicle wheel with which it is intended to function in order to suppress the formation of a rearwardly directed spray when the wheel picks-up water from a road surface.  The plate is mounted in position on the vehicle body along one edge of the plate, either by being rigidly held along this edge or by being pivotally mounted.  The inherent resilience of the rubber plate serves to some extent to cushion the impact of the jets of water which are directed from the road surface by the vehicle wheel in a rearward direction, the plate being arranged in the path of such rearwardly directed water.

Sometimes, the rubber plate is moulded with ribs or the like, in order to exert some downward guiding function for the rearwardly directed water.  However, it is apparent to all road users that the simple rubber plate types of anti-spray flaps have only limited success in their objective of preventing undue generation of rearwardly directed spray.  Indeed, when much water remains on a road surface, it is a common problem that large lorries generate a following curtain of spray which can temporarily overload the window-cleaning capacity of windscreen wiper systems of following vehicles.

As indicated above, the main purpose of an anti-spray flap is to suppress the formation of rearwardly directed spray, and to this end the flap is arranged in the path of the rearwardly directed water from the vehicle wheel. However, the mere placing of the flap in the required position is insufficient, since the flap presents a flat impact surface against which high velocity water jets impinge, with resultant dispersion of the water into spray which is directed laterally of the flap.

Therefore, with a view to minimise spray generation on impact with the flap surface, it is necessary to provide some means for retarding the speed of the water by absorbing at least some of its energy, before the water impacts against the flap surface proper, whereby a lesser impact takes place with a smaller extent of dispersion of water, resulting in less spray generation and a greater influence of gravity in subsequent downward drainage of water over the flap surface.

The present invention has been developed primarily with a view to provide an anti-spray flap for a vehicle wheel which is constructed in such a way as to impart significant retardation to impinging jets of water prior to impact of such jets on a drainage surface of the flap.

According to the invention there is provided an anti-spray flap for a vehicle wheel which is intended to be mounted on a vehicle body in such position as to be in the path of water picked-up from a road surface by the vehicle wheel and directed rearwardly thereby, said flap being made of rubber, synthetic rubber or other elastomeric material and having a drainage surface and a plurality of projections on at least part of said drainage surface, characterised in that:

the projections comprise elongate rod-like projections which are arranged in a first set of parallel rows, and a second set of parallel rows extending perpendicular to the first set of rows;

the centre-to-centre spacing-apart of the projections along each row is equal to approximately three times the transverse dimensions of each projection in the row and measured in a direction along the row;

each projection extends from the drainage surface of the flap through a length which is equal to between eight and a half and ten times the transverse dimension of the projection; and

each projection is made of a material which imparts a Shore hardness in the range 55 to 63.

It is preferred that each projection should have a substantially uniform cross section throughout its length, which cross section may be circular, oval, square or rectangular. When the projection is circular or square in cross section, it is preferred that the transverse dimension i.e. the diameter or the length of side respectively is approximately 1/16th inch (1.6 mm), though this may vary within a range of + or - 5%. In such event, the spacing-apart of the projections along each row, from centre to centre of each adjacent pair of projections, will be approximately 3/16th inch (4.8 mm), thereby leaving a free space between the projections of twice the transverse dimensions of each projection i.e. 1/8th inch (3.2 mm).

Therefore, in a preferred embodiment of the invention, there will be a projection density of 25 projections per square inch (approximately 4 projections per square cm), each projection having a diameter of 1/16th inch (1.6 mm) and being spaced from its neighbouring projections in the first and second set of rows so as to leave a clear space of 1/8th (3.2 mm) along each set of rows.

It has been found in tests that the preferred embodiment significantly reduces the generation of spray when water impinges on the flap, this being believed to be due to the nature and the arrangement of the projections. Thus, the projection density is such as to break-up the water into separate streams which are caused to flow with reduced speed along the spaces defined between the projections and towards the drainage surface.

Further, the nature of the projections is such as to exert an action on impinging water which is sufficiently yielding and flexible as to minimise immediate lateral deflection or "bouncing back" of the impinging water, both of which factors would otherwise give rise to substantial spray formation. The specific factors contributing to this desired nature of the projections are the surface hardness and also the flexibility of the projections, which depends upon the material content and also the ratio length/diameter or "slenderness ratio".

The preferred material from which the projections are made is a rubber based material having constituents which are carefully selected in order to provide a Shore hardness in the range 55 to 63. It is particularly advantageous for the Shore hardness to be in the range 57 to 61, and especially to have a hardness of 58 or 59. Conveniently, though not essentially, the projections will be moulded simultaneously during the formation of the flap, in which case the same material is used to constitute both the flap proper and the projections therefrom.

One embodiment of anti-spray flap for a vehicle wheel according to the invention will now be described in detail, by way of example only, with reference to the accompanying drawing in which:-

Figure 1 is a plan view of the anti-spray flap for a vehicle wheel;

Figure 2 is a perspective view of the anti-spray flap;

Figure 3 is a detailed view of a portion of the flap shown in Figure 1; and

Figure 4 is a detailed side view of projections provided on the flap.

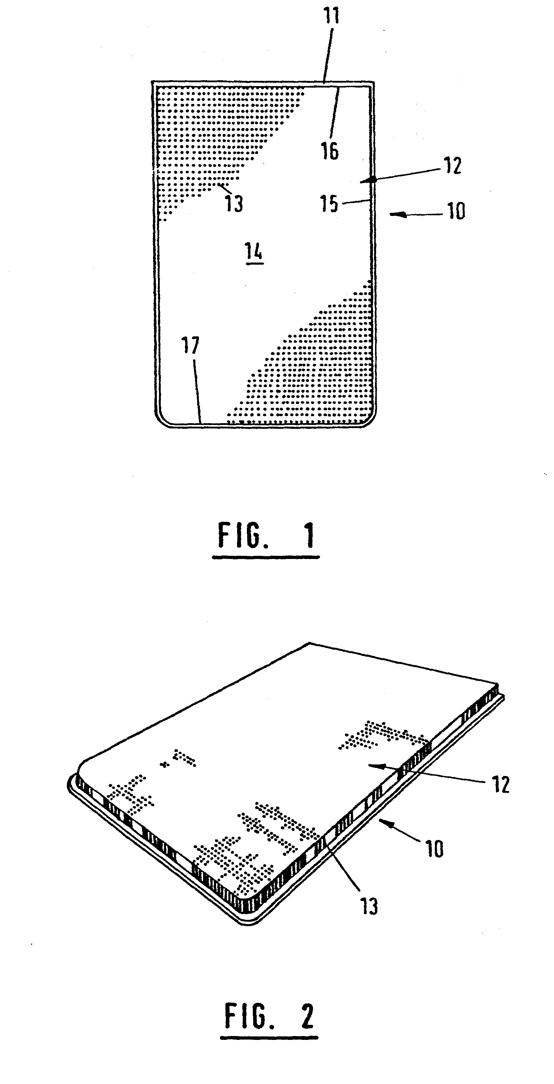

Referring now to the drawing, there is shown an anti-spray flap for a vehicle wheel which is designated generally by reference numeral 10. The flap 10 will be shaped into any suitable form to suit the environment in which it is intended to operate. The flap 10 has an upper margin 11 by means of which the flap may be secured at any suitable mounting region of a mudguard, wheel arch or other part of a vehicle body, in order to minimise the generation of spray thrown up by a vehicle wheel and into the path of following traffic. On the major part of the water-facing surface of the flap 10 there is provided a panel 12 which includes a plurality of spaced-apart projections 13 which are arranged in rows on a drainage surface 14 of the panel 12. As will be seen from the drawing, the projections 13 are arranged in a first set of parallel rows which extend parallel to vertical edge 15 of panel 12, and a second set of parallel rows extending perpendicular to the first set of rows and parallel to upper and lower edges 16 and 17 of the panel 12. The wheel flap shown in Figures 1 and 2 typically may be about 806 mm in legnth along vertical edge 15 and 527 mm in length along edges 16,17. Alternatively, when the anti-spray flap is formed as a wheel valance sheet, these dimensions may be about 1067 mm and 606 mm.

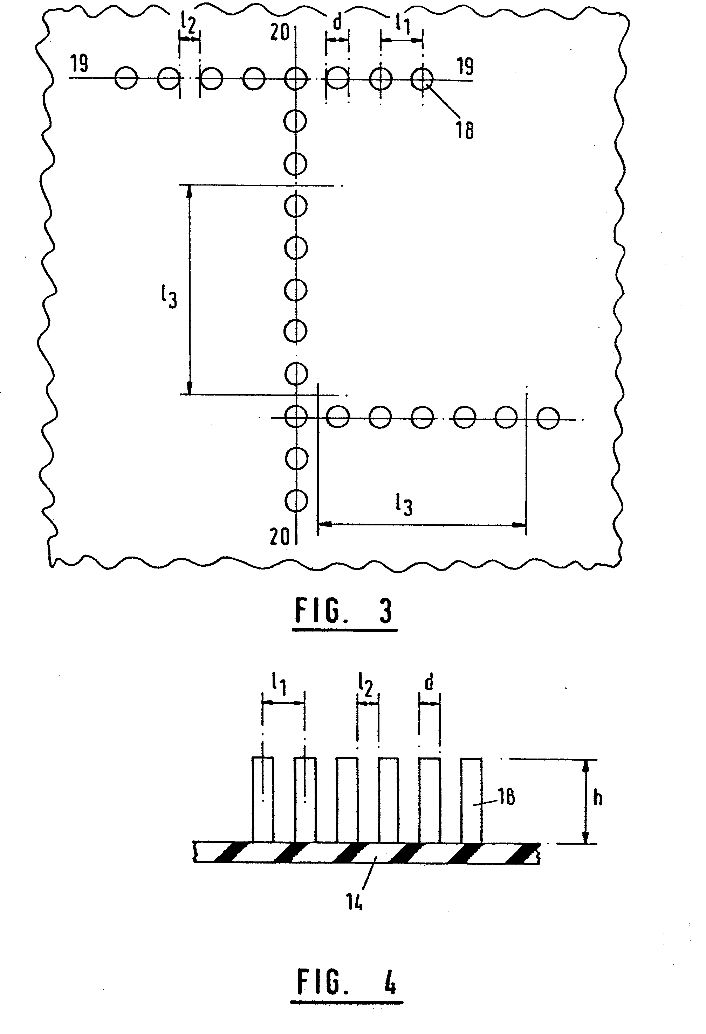

The arrangement of the projections is shown in more detail in Figures 3 and 4. The illustrated projections take the form of circular cross section pips 18, having diameter $\underline{d}$. The centre-to-centre spacing-apart of the pips 18 along each row 19 or 20 (parallel to edges 16,17 and 15 respectively) is designated $1_1$, and this spacing is equal to approximately three times the transverse dimension (d) of each pip in the row and measured in a direction along the row. The spacing-apart of the pips 18, between adjacent peripheral surfaces, is designated $1_2$, and this spacing is equal to approximately twice the transverse dimension (d) of each pip 18. A unit area of the pips 18 has a side length $1_3$. The projecting height of each pip 18 is shown at $\underline{h}$ in Figure 3.

The "slenderness ratio" or ratio of height $\underline{h}$ to transverse dimensiion $\underline{d}$ is between eight and a half and ten to 1. This feature, in combination with the material content of the pip 18, gives rise to the required degree of flexibility to the pips in order to disperse and retard impinging jets of water. The material content of the pip 18 is also selected from suitable rubber constituents and additives as to provide a Shore hardness in the range 55 to 63.

In a preferred arrangement, each pip 18 has a diameter of about 1/16th inch (1.6 mm), in which case centre-to-centre spacing $1_1$ equals 3/16th inch (4.8 mm) and the free space $1_2$ defined between each pair of adjacent pips 18 is equal to 1/8th inch (3.2 mm). This therefore gives rise to a pip density of 25 pips per square inch (= approximately 4 pips per square centimetre) when the unit area has a side length $1_3$ equal to 1 inch (2.54 cm). The height $\underline{h}$ of each pip 18 is 9/16th inch (14.3 mm) i.e. nine times the transverse dimension.

There is a standard water absorption or dispersal test, conforming to BS AU 200/1, and an anti-spray flap with the above parameters has been found to exceed the minimum requirement of this standard test, which requires a minimum of 60% of water absorption. The tests with an embodiment of flap according to the invention have resulted in water absorption figure in the region of 70% or better. This test measures the proportion of impinging water which is not directed laterally to form spray.

The preferred height h of each pip is 9/16th inch (14.3 mm), though this may be varied within the range 7/32nd inch (5.6 mm) up to 5/8th inch (15.9 mm). However, if pips are produced which exceed 5/8th inch (15.9 mm) in height, they become vulnerable to breaking and tend to collapse with a short life. Pips which are below 7/32nd inch (5.6 mm) in height tend to lack the required flexibility, resulting in less water absorption rate and an inability to cope with the amount of water thrown onto the surface. It should be understood that these parameters of height are in relation to a pip having a transverse dimension (which will be a diameter in the case of a circular cross section pip) of 1/16th inch (1.6 mm) plus or minus 5%. If pips have a diameter much above 1/16th inch (1.6 mm) in diameter, this reduces the number of pips per square inch i.e. the pip density, whereby water absorption is lower due to surface water build-up on the surface presented by the pips, thereby reducing drainage capability. If the pips are produced with diameter much less than 1/16th inch (1.6 mm) they become vulnerable to breakage and damage under water pressure and loose water absorption properties due to collapse.

The preferred pip density is 25 pips per square inch (3.875 pips per square centimetre) over the workable area of the flap, and substantial departure from this density, to a higher or lower density, will

0192344

reduce the spray-suppression properties of the flap.

As indicated above, the Shore hardness range for the pip is 55 to 63, and if this hardness exceeds or drops below this range, the absorption effect can be reduced to unacceptable levels. Thus, if the surface hardness is too hard i.e. in excess of 63, water absorption becomes poor due to the inflexibility of the pips. However, if the configuration is too soft i.e. less than 55, the absorption is affected by early damage and loss of pips and the rapid collapse of the pips causing clogging on the surface.

The pips 18 form elongate rod-like projections which are preferably of substantially uniform cross section throughout their length, being circular, oval, square or rectangular, by way of example. However,

CLAIMS:

1. An anti-spray flap (10) for a vehicle wheel which is intended to be mounted on a vehicle body in such position as to be in the path of water picked-up from a road surface by the vehicle wheel and directed rearwardly thereby, said flap being made of rubber, synthetic rubber or other elastomeric material and having a drainage surface (14) and a plurality of projections(13) on at least part of said drainage surface, characterised in that:

the projections comprise elongate rod-like projections (18) which are arranged in a first set of parallel rows (19), and a second set of parallel rows (20) extending perpendicular to the first set of rows (19);

the centre-to-centre spacing-apart ($l_1$) of the projections (18) along each row (19,20) is equal to approximately three times the transverse dimension (d) of each projection in the row and measured in a direction along the row;

each projection (18) extends from the drainage surface (14) of the flap through a length (h) which is equal to between eight and a half and ten times the transverse dimension (d) of the projection; and

each projection (18) is made of a material which imparts a Shore hardness in the range 55 to 63.

2. An anti-spray flap according to claim 1, characterised in that each projection (18) has a substantially uniform cross-section throughout its length.

3. An anti-spray flap according to claim 2, characterised in that the cross-section of each projection (18) is circular, oval, square or rectangular.

4. An anti-spray flap according to claim 3, and having circular or square cross-section projections, characterised in that the transverse dimension of each projection is equal to approximately 1.6 mm, thereby defining a spacing-apart of the projections along each row, from centre-to-centre, of each adjacent pair of projections, equal to approximately 4.8 mm and a free space between the projections equal to 3.2 mm.

5. An anti-spray flap according to claim 4, characterised in that the projection density is equal to approximately four projections per square centimetre.

6. An anti-spray flap according to any one of the preceding claims, characterised in that the projections are made from a rubber based material with a Shore hardness in the range 57 to 61, and preferably 58 or 59.

0192344

FIG. 1

FIG. 2

FIG. 3

FIG. 4

European Patent Office

**EUROPEAN SEARCH REPORT**

0192344

Application number

EP  86 30 0470

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | DE-A-3 102 805  (DUNLOP)<br>* Page 6, third paragraph *<br>--- | 1 | B 62 D  25/18 |
| P,X | EP-A-O 134 156  (SULLIVAN)<br>* Claim 1 *<br>--- | 1 | |
| X | US-A-4 398 739  (McKENZIE)<br>* Claim 1 *<br>--- | 1 | |
| X | GB-A-1 101 143  (K. DAHL ANDERSEN)<br>* Claims 1,3-5,7,10,11 *<br>--- | 1 | |
| A | GB-A-2 126 181  (WOLF)<br>--- | | |
| A | GB-A-2 084 094  (R.J. ONIONS)<br>----- | | |

TECHNICAL FIELDS SEARCHED (Int. Cl.4)

B 62 D  25/18

The present search report has been drawn up for all claims

| Place of search | Date of completion of the search | Examiner |
|---|---|---|
| THE HAGUE | 16-04-1986 | SCHMITTER J.M. |